# EUROPÄISCHE PATENTSCHRIFT

(11) **EP 0 662 024 B1**
(45) Veröffentlichungstag und Bekanntmachung des Hinweises auf die Patenterteilung: **12.03.1997**
(21) Anmeldenummer: 93917540.2
(22) Anmeldetag: 11.08.1993
(51) Int. Cl.: B24B 39/02, B23P 9/00, B21C 37/30, C23C 14/00

(54) **WERKZEUG ZUR BEHANDLUNG VON OBERFLÄCHEN VON BAUTEILEN**
TOOL FOR WORKING THE SURFACES OF COMPONENTS
OUTIL POUR LE TRAITEMENT DES SURFACES DE PIECES

(30) Priorität: 28.09.1992 DE 4232430
(43) Veröffentlichungstag der Anmeldung: 12.07.1995
(73) Patentinhaber: ROBERT BOSCH GMBH, 70442 Stuttgart (DE)
(72) Erfinder: FINKBEINER, Ludwig, D-74399 Walheim (DE)
(86) Internationale Anmeldenummer: DE9300716
(87) Internationale Veröffentlichungsnummer: WO9407655

(56) Entgegenhaltungen:
- EP-A- 0 515 868
- GB-A- 833 989
- US-A- 4 771 627

## Beschreibung

Die Erfindung bezieht sich auf ein Werkzeug zur Behandlung von Oberflächen von Bauteilen. Bisher wird die Bearbeitung von Oberflächen durch Honen (Ziehschleifen) oder Läppen mit Hilfe von Hon- oder Läppwerkzeugen durchgeführt. Für die Massenfertigung verwendet man halb- oder vollautomatisch arbeitende Honmaschinen. Hierbei wird die Oberfläche in einem mehrstufigen Prozeß bearbeitet. Die Anforderungen an eine Feinstbearbeitung von Oberflächen können aber nicht erfüllt werden. Es bleiben zu viele Risse und Riefen zurück, so daß die behandelte Oberfläche relativ störanfällig ist.

Aus der GB-A-833 989 ist eine Vorrichtung zum Polieren von Oberflächen von Bohrungen bekannt. Hier wird mit Hilfe von drei Ringen am Dorn eine polierte Oberfläche angestrebt. Ferner wird der Dorn nur durch die Bohrung hindurchgeschoben, ohne daß eine chemische Beeinflussung der Oberfläche stattfindet.

### Vorteile der Erfindung

Das erfindungsgemäße Werkzeug mit den Merkmalen des Hauptanspruchs hat demgegenüber den Vorteil, daß die bearbeitete Oberfläche nicht spanabhebend, sondern werkstoffverdichtend und werkstoffschließend bearbeitet wird. Dadurch wird ein Härtungs-, Glättungs- und Verdichtungsprozeß der Oberfläche durchgeführt. Die erreichte Maßgenauigkeit des bearbeiteten Bauteils liegt weit über der im bisherigen Verfahren erreichten. Da die Oberfläche kaum Rillen aufweist, ist die behandelnde Oberfläche nahezu korrosionsunanfällig. Dadurch haben die bearbeiteten Bauteile eine relativ hohe Lebensdauer.

Durch die in den Unteransprüchen aufgeführten Maßnahmen und Merkmale sind besondere Weiterbildungen des im Hauptanspruch angegebenen Werkzeugs beschrieben.

### Zeichnung

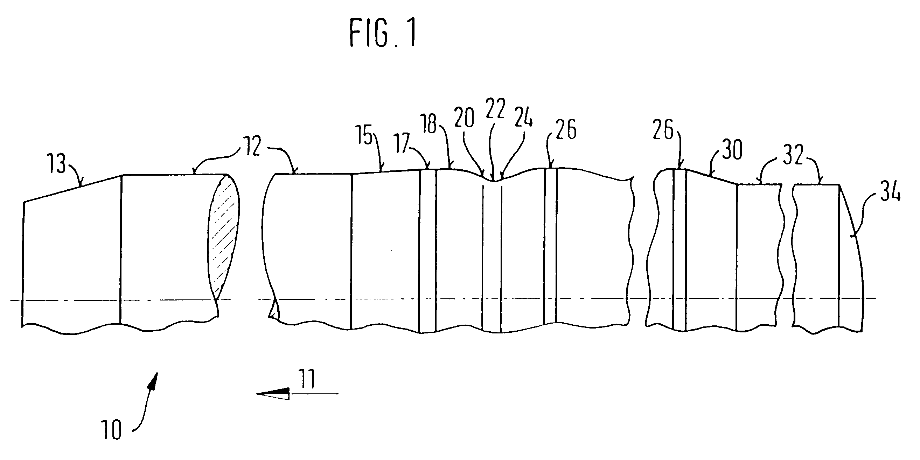

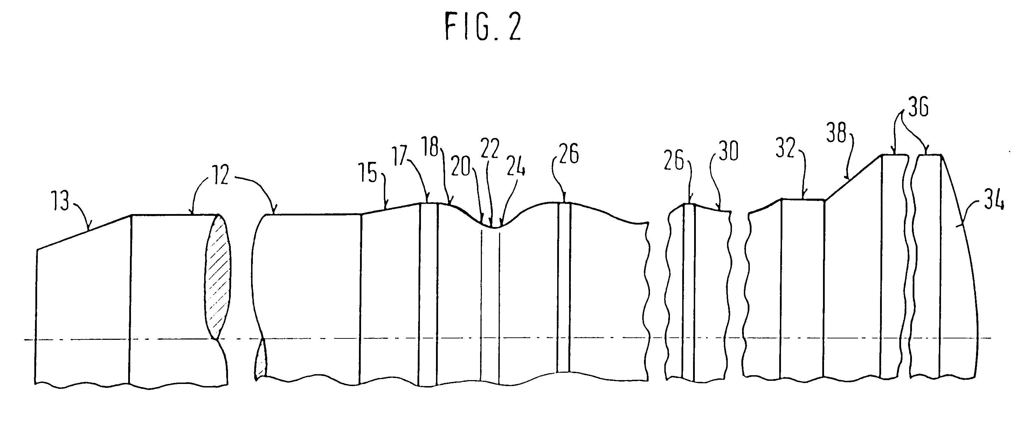

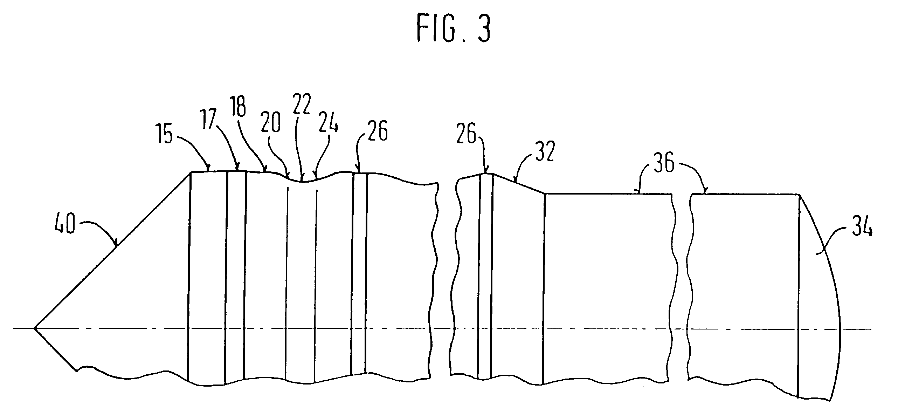

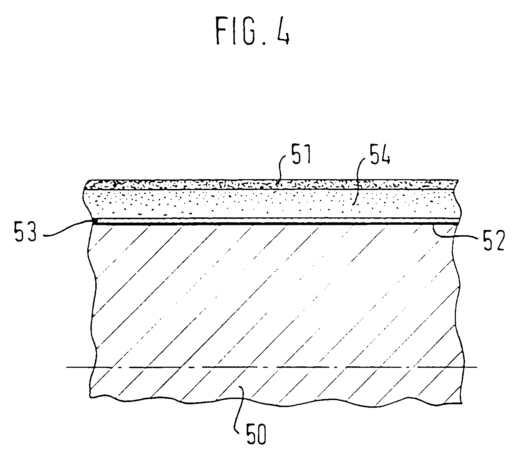

Ausführungsbeispiele der Erfindung sind in der nachfolgenden Zeichnung dargestellt und in der nachfolgenden Beschreibung näher erläutert. Es zeigen die Figur 1 einen Längsschnitt durch das erfindungsgemäße Werkzeug in schematischer Darstellung, wobei die einzelnen Bereiche zur Verdeutlichung nicht maßstabsgetreu dargestellt sind. In den Figuren 2 und 3 sind Abwandlungen nach dem Ausführungsbeispiel nach Figur 1 dargestellt, und in der Figur 4 ist ein schichtartiger Aufbau der Hartschicht auf den Grundwerkstoff des Werkzeuges gezeigt.

### Beschreibung der Ausführungsbeispiele

In der Figur 1 ist mit 10 ein Werkzeug bezeichnet, das zur gleichzeitigen Glättung und Härtung von Oberflächen geeignet ist. In Arbeitsrichtung gesehen, die in der Figur 1 mit dem Pfeil 11 gekennzeichnet ist, hat das Werkzeug 10 am Anfang einen Zentrierbereich 12. Dieser Zentrierbereich 12 weist einen konisch verlaufenden Einführbereich 13 auf, der etwa eine Schräge von ca. 7° aufweist. Der Einführbereich 13 dient dazu, um das Werkzeug ohne Beschädigung, z.B. in eine Bohrung, einzuführen. Zur Erläuterung ist im folgenden dann immer auf eine Bohrung eingegangen. Der Übergang vom Einführbereich 13 in den Zentrierbereich 12 weist einen Feinstradius auf.

Dies ist notwendig, um eine Beschädigung der zu bearbeitenden Oberfläche zu verhindern. Der Zentrierbereich 12 selbst ist zylindrisch ausgebildet. Wichtig ist aber, daß die Achse des Werkzeugs 10 und die Achse der Bohrung zusammenfallen, so daß das Werkzeug 10 nicht in der Bohrung verkantet.

An den Zentrierbereich 12 schließt sich ein Einlaufbereich 15 an, der eine Schräge aufweist. Die Steigung dieser Schräge liegt zwischen 0,7° und 2,3°. Sie ist abhängig vom Werkstoff des Werkzeugs als auch vom Werkstoff des zu bearbeitenden Bauteils, d.h. hier z.B. eines Ventils, in dem die Bohrung ausgebildet ist. Die Werte der Steigung sind zur Zeit noch empirisch zu ermitteln. Dieser Einlaufbereich 15 dient dazu, um ein undefiniertes Abschaben durch den sich anschließenden Arbeitsbereich 17 am Beginn der Bohrung zu verhindern. Vom Einlaufbereich 15 führt ein Tangentialbereich 18 zum Arbeitsbereich 17. Der Verlauf des Tangentialbereichs 18 entspricht nahezu einem großen Radius, so daß er einer Tangente entsprechen würde. Dieser Tangentialbereich 18 ist notwendig, um einen kantigen Übergang vom Einlaufbereich 15 auf den Arbeitsbereich 17 zu vermeiden. Durch die radiusartige Ausbildung des Tangentialbereichs 18 wird bereits eine Verdichtung des Materials des zu bearbeitenden Bauteils bewirkt. Im Unterschied zu einem, wie oben ausgeführt, nicht erwünschten kantigen Übergang, wird durch den Radius des Tangentialbereichs 18 keine Verschiebung des Materials des Werkstoffs im Mikrobereich in Bewegungsrichtung 11 des Werkzeugs 10 bewirkt, sondern das Material wird weitgehend radial nach außen, d.h. senkrecht oder unter 90° zur Bewegungsrichtung 11 verschoben. Der Radius des Tangentialbereichs 18 ist abhängig vom Material des Bauteils und auch abhängig vom Verhältnis zwischen der Länge und dem Durchmesser des Werkzeugs 10.

Der sich nun anschließende, eigentliche Arbeitsbereich 17 besteht aus einem zylindrischen Bereich, wobei der Durchmesser bis etwa 0,2% größer als der gewünschte Durchmesser der zu bearbeitenden Bohrung ist. Dieses Aufmaß ist abhängig vom Material des Bauteils und der Länge der Bohrung. Die Breite dieses Arbeitsbereichs 17 am Werkzeug 10 entspricht in etwa 0,4% des bearbeiteten Durchmessers der Bohrung. An den Arbeitsbereich 17 schließt sich ein Erholungsbereich 20 an, der kurvenförmig ausgebildet ist. Er dient zur Erholung für das vom Arbeitsbereich 17 bearbeitete Material des Bauteils. Die Erholungsphase findet im Mikrobereich der Oberfläche der Bohrung des Bauteils statt. Das Material des Bauteils kann sich im Erholungsbereich 20 wieder geringfügig verteilen.

Nach dem Erholungsbereich 20 ist eine Sammelmulde 22 für Fremdkörper vorhanden, die sich durch die vorausgegangene mechanische Vorbehandlung in der Bohrung befinden. Hierbei kann es sich z.B. um Schleifkörner handeln oder um sonstige Verschmutzungen oder um verbrauchte Bestandteile der Flüssigkeit, die, wie weiter unten noch erwähnt wird, zur Glättung der Oberfläche der Bohrung mit Hilfe des Werkzeugs 10 verwendet wird. Die Sammelmulde 22 ist radiusförmig ausgebildet, wobei der Radius abhängig ist vom Durchmesser und der Länge des Werkzeugs. Ein kontinuierlicher Übergang vom Erholungsbereich 20 in die Sammelmulde 22, wie bei einer zusammengesetzten Kurve bei mathematischer Betrachtung, ist für eine beschädigungsfreie Rückbewegung des Werkzeugs aus der Bohrung wichtig. Der sich anschließende Bereich 24 entspricht in seiner Form, Wirkung und Aufgabe dem Erholungsbereich 20. Würde man durch das Minimum, d.h. durch den tiefsten Punkt der Sammelmulde 22 eine gedachte Spiegelachse legen, so wurde der Übergang von der Sammelmulde 22 in den Bereich 24 und der Bereich 24 selbst eine spiegelbildliche Wiederholung des Erholungsbereichs 20 und des Übergangs vom Erholungsbereich 20 in die Sammelmulde 22 darstellen. Dies bedeutet auch, daß der Bereich 22 kontinuierlich in einen Zweiten Arbeitsbereich 26 übergeht, und zwar so, wie der Arbeitsbereich 17 in den Erholungsbereich 20 übergeht. Dieser Arbeitsbereich 26 hat nur noch ca. 60% der Länge des Arbeitsbereichs 17. Der Durchmesser entspricht aber genau dem Durchmesser des Arbeitsbereichs 17. Bis auf die Länge der Arbeitsbereiche 26 und 17 stellen die Bereiche Übergang von der Sammelmulde 22 in den Bereich 24, der Bereich 24 selbst, der Arbeitsbereich 26 eine spiegelbildliche Wiederholung der Bereiche 17, 20, 22 dar. Der Arbeitsbereich 26 und die zwischen den Arbeitsbereichen 17 und 26 liegenden Bereiche wiederholen sich nun identisch so oft, bis die Länge des zu bearbeitenden Teils erreicht ist. Die sich wiederholenden Arbeitsbereiche 26 weisen alle 60% der Länge des ersten Arbeitsbereichs 17 auf. An den letzten Arbeitsbereich 26 schließt sich ein Auslaufbereich 30 an, dessen Steigung einen geringfügig größeren Steigungswinkel als der Einführbereich 15 aufweist. Der Steigungswinkel liegt zwischen 3° und 7°. Er dient wieder als Ausdehnungsbereich für den soeben bearbeiteten Werkstoff des Bauteils.

Der Übergang vom Auslaufbereich 30 in den Auslaufzylinder 32 ist radiusförmig, um so eine Bruchgefahr für das Werkzeug zu vermeiden. Die Länge des Auslaufzylinders 32 entspricht etwa 60% des Zentrierbereiches 12. Der Durchmesser des Auslaufzylinders 32 ist etwa 0,5% bis 1% geringer als der Durchmesser des Arbeitsbereiches 17 oder 26. Dies bedeutet auch, daß der Durchmesser des Auslaufzylinders 32 kleiner ist als der Durchmesser des Zentrierbereichs 12. Im Einzelfall kann er aber auch gleich groß sein.

Den Abschluß des Werkzeugs 10 bildet eine Kalotte 34, die zur Krafteinleitung und Kraftübertragung der Vorschubbewegung für das Werkzeug 10 in Richtung des Pfeils 11 dient. Die Kalotte 34 ist dabei so auszubilden, daß eine punktförmige Krafteinleitung, z.B. mit Hilfe einer automatischen Presse möglich ist. Der Radius ist empirisch ermittelt und abhängig von der Länge und vom Durchmesser des Werkzeugs 10. Unter mathematischer Betrachtungsweise hat die Kalotte 34 bei kleinerem Durchmesser des Werkzeugs 10 die Form eines Korbbogens, was bedeutet, daß die Seitenflächen der Kalotte 34 steiler verlaufen als bei einer radiusförmigen Ausbildung. Dies ist insbesondere bei Werkzeugen mit größerer Länge und kleinerem Durchmesser notwendig. Ferner wäre die Kalotte 34 spiegelbildlich zu einer durch die Spitze der Kalotte 34 verlaufenden gedachten Spiegelachse auszubilden.

Die oben beschriebenen Bereiche des Werkzeugs stellen die wesentlichen Abschnitte dar, die unabhängig von der Verwendung des Werkzeugs immer vorhanden sind. Wird nun das Werkzeug dazu verwendet, eine durchgehende Bohrung zu bearbeiten, so ist der Zentrierbereich 12, wie oben beschrieben, direkt am Werkzeug ausgebildet. Alternativ könnte ein Zentrierberich am zu bearbeitenden Bauteil angebracht sein. An dem Zentrierbereich 12 schließen sich noch der oder die Arbeitsteile des Werkzeugs an. Er besteht aus dem Arbeitsbereich 17 bis zum Arbeitsbereich 26, wobei sich dieser Arbeitsteil mehrfach wiederholt. Wie bereits oben erwähnt, ist dann nach der ersten Wiederholung der Arbeitsbereich 26 immer gleich lang, hat aber jeweils nur 60% der Länge des ersten Arbeitsbereichs 17, der sich an den Einlaufbereich 15 anschließt. Der Arbeitsteil besteht nun aus mehreren Stufen, wobei die Arbeitsbereiche 17 und 26 der einzelnen Stufen jeweils einen größeren Durchmesser aufweisen. Hierbei nimmt der Durchmesser von Stufe zu Stufe nicht linear zu, sondern die Zunahme der Durchmesser der Arbeitsbereiche 17, 26 bzw. 17a, 26a ist über die gesamte Länge des Werkzeugs kurvenförmig und hat z.B. die Form einer logarithmischen oder einer potentiell verlaufenden Kurve. Der genaue Verlauf für das Werkzeug ist empirisch ermittelt worden.

Die letzte Stufe, d.h. der Arbeitsbereich 26 ist dann dem Durchmesser der bearbeiteten Bohrung mit dem notwendigen Gesamtaufmaß (das Aufmaß nimmt ebenfalls pro Stufe zu) angepaßt. An diesen Arbeitsbereich 26 schließt sich der Auslaufbereich 30, der Auslaufzylinder 32 und die Kalotte 34 an.

In einer Variation des Werkzeugs kann dieses auch zur Bearbeitung einer Sacklochbohrung verwendet werden. Hierbei ist es notwendig, das Werkzeug wieder aus der Sacklochbohrung herauszuziehen, was einen Bereich erfordert, der zum Angriff eines geeigneten Werkzeugs geeignet ist. Es ist hierzu zwischen dem Auslaufzylinder 32 und der Kalotte 34 ein Mitnahmebereich 36 angeordnet. Dieser Mitnahmebereich 36 ist z.B. als Zweiflachkant oder als Vierflachkant ausgebildet. Für ein sicheres Herausziehen des Werkzeugs 10 ist die Oberfläche des Mitnahmebereichs 36 mit einer bestimmten Rauigkeit auszuführen.

Bei einer anderen Variation können mit Hilfe des Werkzeugs auch Sitze und Schultern in der Bohrung ausgebildet werden. Hierzu hat das Werkzeug nach dem Arbeitsbereich 26 einen Sitz 38, der dem Maß des gewünschten Sitzes in der Bohrung entspricht. Die Schräge des Sitzes 38 ist, abhängig vom Werkstoff des Bauteils um etwa 0,5% größer als die Schräge des zu schaffenden Sitzes (dies ist notwendig wegen dem Zurückfedern des Werkstoffs und des Bauteils). An diesem Sitz 38 würde sich dann der Auslaufzylinder 32 anschließen.

Selbstverständlich wäre es auch denkbar, um den Sitz von Einspritzventilen zu bilden, den Sitz vor dem Einführbereich 13 und vor dem Zentrierbereich 12 auszubilden. Beide Bereiche 13 und 12 werden bei dem vorgeschobenen Sitz 40 in der Länge sehr klein oder können wie in Figur 3 gezeigt, entfallen. Es würden sich nun die Arbeitsbereiche 17 und die nachfolgenden, wie oben beschriebenen Bereiche anschließen. Ferner könnte auch ein gestufter Arbeitsbereich mit einem zur Ausbildung eines Sitzes geeigneten Sitz verwendet werden. Die oben beschriebenen Arbeitsbereiche und gegebenenfalls Sitze können in beliebiger Weise miteinander an einem Werkzeug kombiniert werden.

Um mit dem oben beschriebenen Werkzeug eine Oberfläche härten und glätten zu können, muß das Werkzeug 10 aus einem bestimmten Material hergestellt sein und eine mit einem besonderen Verfahren aufgebrachte Randschicht aufweisen. Der Grundkörper 50 des Werkzeugs 10 muß aus einem Metall mit einem homogenen, feinkörnigen Gefüge bestehen. Will man ein dünnes Werkzeug etwa mit einem Durchmesser von 2 bis 12 mm herstellen, so verwendet man hierzu Hochdrucksinterhalbzeuge, d.h. einen Träger, der im Hochdrucksinterverfahren hergestellt wurde. Für dickere Werkzeuge kann Hochleistungsschnellschnittstahl (HSS) verwendet werden. In allen Fällen wird aber ein Werkzeug hergestellt, dessen Durchmesser etwa um 40% größer ist als der für den späteren Arbeitsbereich 17, 26 gewünschte Durchmesser. In diesen über den gewünschten Durchmesser hinausgehenden Bereich befinden sich Verschmutzungen und Entkohlungen, die bei der Herstellung des Halbzeugs, sowohl für ein dickes oder für ein dünnes Werkzeug, entstehen. Dieser 40%ige Überhang des Durchmessers wird mechanisch, d.h. z.B. durch Fräsen entfernt. Die dann entstehende Oberfläche sollte aber möglichst glatt sein. Nach dem Abfräsen erhält man einen im Zentrum relativ homogenen Träger- bzw. Grundwerkstoff 50. Ferner wird durch diese mechanische Bearbeitung der verbleibende Werkstoff für das Werkzeug verdichtet. Dies bedeutet, daß die Körner noch besser miteinander verschmelzen, so daß ein noch dichteres Gefüge entsteht. Dieses so hergestellte Halbzeug für das Werkzeug dient als Ausgangsmaterial für das Erzeugen bzw. Aufbringen einer Nichtmetallischen-Hartschicht 51. Diese Hartschicht ist zusammen mit der oben beschriebenen geometrischen Form des Werkzeugs 10 wesentlich für die Qualität der Härte und der Glätte der behandelten Oberfläche.

Angestrebt ist am Ende der Bearbeitungsphasen eine Nichtmetallische Hartschicht auf der Außenwand, d.h. auf der die sogenannte Arbeitsfläche des Werkzeugs bildende Wand. Diese Nichtmetallische-Hartschicht 51 ist aber auf einem metallischen Trägerwerkstoff 50, wie er oben beschrieben ist, aufzubringen. Ein entsprechendes Aufbau des Werkzeugs 10 ist in der Figur 4 dargestellt. Hier ist mit 50 der Trägerwerkstoff bezeichnet, der mit einem homogenen, feinkörnigen Gefüge in der oben erläuterten Weise hergestellt ist. Wichtig ist hierbei, daß die Oberfläche des Trägerwerkstoffs 50 möglichst glatt ist und über die gesamte Länge die Maßhaltigkeit erfüllt. Auf den Trägerwerkstoff 50 ist eine dünne, ca. 0,2 bis 0,3 µm dicke Aktivierungsschicht 52 aufgebracht. Diese Aktivierungsschicht 52 besteht z.B. aus Platin, Paladium, Zinn, Nickel, Silber oder Gold. Natürlich sind auch Stoffverbindungen von diesen Stoffen untereinander möglich. Diese Aktivierungsschicht 52 liegt netzartig auf der gesamten Außenfläche des Trägerwerkstoffs 50 auf, was bedeutet, daß die Aktivierungsschicht nicht schließen kann, also keine völlig geschlossene Oberfläche auf dem Trägerwerkstoff 50 bilden soll. Diese Aktivierungsschicht 52 wird elektrolytisch-chemisch aufgebracht. Dies bedeutet, daß gegenüber einem elektrolytischen Verfahren (physikalisches Verfahren) der Elektrolyt eine zusätzliche Reinigungsaufgabe mit erfüllt.

Die Aktivierungsschicht 52 ist kohäsiv und stellt einen Weichwerkstoff dar. Sie ist nun kohäsiv mit dem Werkstoff des Trägers 50 verbunden und soll ebenfalls kohäsiv mit der nachfolgenden Reinmetallschicht 44 verbunden werden. Hierbei diffundieren die Ionen der Aktivierungsschicht 52 in den Trägerwerkstoff 50 ein. Man erhält dadurch eine elastische Zwischenschicht, die wie ein Netz die Aktivierungsschicht 52 mit dem Trägerwerkstoff 50 verbindet. Anschließend wird auf der Aktivierungsschicht 52 eine Reinmetallschicht 53, z.B. von Titan, Chrom, Bor oder Wolfram aufgebracht. Diese Reinmetallschicht wird durch Ionenaustausch und Sputtern (PVD-Verfahren, d.h. physikal vapour deposition) aufgebracht. Gleichzeitig wird im Lichtbogen die entstehende Schicht durch Schmelzen verbunden. Dies geschieht so lange, bis eine Mindestschicht von 0,3 bis 0,5 µm auf der Aktivierungsschicht 52 vorhanden ist. Diese Reinmetallschicht 53 ist somit kohäsiv mit dem Trägerwerkstoff 50 über die Aktivierungsschicht 52 verbunden und ist auch teilkohäsiv mit der im folgenden erläuterten sich aufbauenden Nichtmetallischen-Hartschicht 51 verbunden.

Hat die Reinmetallschicht 53 ihre Mindestschichtdicke erreicht, werden in definierter Weise Kohlenstoff- und/oder Stickstoffionen dazugegeben, so daß sich über eine Übergangsschicht 54 die Nichtmetallische-Hartschicht 51 aufbauen kann. Die Kohlenstoff- bzw. Stickstoffionen werden im sogenannten PVD-Verfahren (Physical Vapour Deposition) im Vakuum z.B. bei mindestens 10⁻³ bar oder Hochvakuum durchgeführt. Hierbei wird der Anteil der zugeführten Komponenten Stickstoff und Kohlenstoff radial nach außen gesehen, d.h. zur Nichtmetallischen-Hartschicht 51 hin immer größer. Der Übergangsbereich 54 schließt dann mit der homogenen Nichtmetallischen-Hartschicht 51 ab, die eine Dichtheit von ca. 95% bis 98% besitzt. Diese Nichtmetallische-Hartschicht 51 besteht dann aus einer Metallkohlenstoff-Stickstoffverbindung bzw. Metallkohlenstoffverbindung bzw. Metallstickstoffverbindung (Nitridlegierung). Am Beispiel Titan könnte die Hartschicht 51 aus TiN oder Ti(CN) bestehen.

Um mit dem oben beschriebenen Werkzeug 10 Oberflächen bearbeiten zu können, muß eine im folgenden beschriebene Ionen-Schmier-Flüssigkeit verwendet werden. Diese Flüssigkeit hat die Aufgaben Schmierung, Kühlung und Legierung der zu behandelnden Oberfläche. Während bisher für jeden dieser drei Vorgänge eine eigene, auf die jeweilige Aufgabe abgestimmte Flüssigkeit verwendet wurde, werden die drei Aufgaben nun nur noch von einer Flüssigkeit erfüllt. Aufgrund ihrer Zusammensetzung und ihrer Aufgabe wird die Flüssigkeit als Ionen-Schmier-Flüssigkeit bezeichnet. Diese Ionen-Schmier-Flüssigkeit hat eine Trägerflüssigkeit, die überwiegend aus organischen, säurearmen Ölen, wie z.B. Rappsöl besteht. Der restliche Bestandteil ist ein synthetisches Mineralöl, z.B. säurearmes chlorfreies Öl. Aufgrund der Kombination der beiden obengenannten Bestandteile wird die Viskosität der Ionen-Schmier-Flüssigkeit auf dünnflüssig, d.h. in einem Bereich von 9 bis 12 Ctst (Gentistock) eingestellt. Die genaue Zusammensetzung ist abhängig von dem Werkstoff des zu bearbeitenden Werkstücks. Das heißt, daß statt der organischen Öle auch anorganische Öle verwendet werden können. In diese so vorbereitete Ionen-Schmier-Flüssigkeit wird nun mindestens 15 Volumenprozent Feinruß und mindestens 17 Volumenprozent Feingraphit eingebracht. Anschließend wird dieses Gemisch gefiltert (Korngröße maximal 0,3 µm), um eine möglichst dünnflüssige Ionen-Schmier-Flüssigkeit beizubehalten. Ferner muß eine feine und gleichmäßige Verteilung der beiden obengenannten Bestandteile, Feinruß und Feingraphit gewährleistet sein.

Im folgenden wird nun die Ionen-Schmier-Flüssigkeit auf das zu bearbeitende Werkstück und somit auf seine Legierungsaufgabe abgestimmt. Dies bedeutet, daß verschiedene Metall-Ionen, die im Werkstoff des zu bearbeitenden Werkstücks gut legierbar sind, wie z.B. Zinn (Sn), Gold (Au), Silber (Ag), Paladium (Pl), Nickel (Ni) zugegeben werden. Die so hergestellte Flüssigkeit wird gerührt und anschließend in geringen Mengen auf das Werkzeug 10 aufgetragen. Hierbei kann bereits ein Tropfen der Ionen-Schmier-Flüssigkeit ausreichen. Mit Hilfe des oben, sowohl bezüglich Geometrie als auch Zusammensetzung beschriebenen Werkzeugs 10 und der Ionen-Schmier-Flüssigkeit können nun die Oberflächen mit dem nachfolgenden Verfahren bearbeitet werden.

Auf das Werkzeug 10 wird eine geringe Menge der Ionen-Schmier-Flüssigkeit aufgegeben. Anschließend wird das Werkzeug 10 in die Bohrung mit dem Einführbereich 13 und den Zentrierbereich 12 eingeführt. Das Werkzeug 10 wird hierbei mit einer äußerst guten Zentrierung in die Bohrung mit Hilfe einer automatischen Presse durch die Bohrung hindurchgeschoben. Hierbei ist eine bestimmte Mindestgeschwindigkeit notwendig, um ein Erwärmen in der Oberflächenstruktur der Bohrung zu erreichen. Diese Erwärmung ist wegen der Hartschicht 51 notwendig. Harte Werkstoffe würden im kalten Zustand beim Durchschieben reißen. Hingegen bei Erwärmung wird beim Durchschieben ein Werkstoffausgleich, d.h. ein Auffüllen der Bearbeitungsrillen erreicht. Aufgrund der Ionen-Schmier-Flüssigkeit entsteht wenig Reibung, wenn die Hartschicht 51 des Werkzeugs 10 über ungleiche Stellen der Bohrung hinweggeht. Die dabei frei werdenden Ionen werden in den Werkstoff des Bauteils eingebunden. Hierbei wird durch die Ionen-Schmier-Flüssigkeit eine kohäsive Einbindung erreicht, damit die Bestandteile der Bauteil-Oberfläche "nicht mehr heraus fallen" können.

Bei der Variante mit dem zu bildenden Sitz wird das Werkzeug 10 soweit in die Bohrung eingeführt, bis der Sitz des Werkzeugs 10 an der zu bearbeitenden Schulter der Bohrung anliegt. Nun wird das Werkzeug 10 mehrmals gedreht und anschließend wieder aus der Bohrung herausgezogen.

Das oben beschriebene Werkzeug mit mehreren Stufen wird insbesondere verwendet bei Unrundheiten der Bohrung oder bei zu großer Rauigkeit der Oberfläche der Bohrung des Bauteiles. Die unterschiedlichen Stufen müssen dann je nach Länge der zu bearbeitenden Bohrung zum Durchmesser der Bohrung ausgelegt sein.

## Patentansprüche

1. Werkzeug zur Behandlung von Oberflächen von Bauteilen, insbesondere von Bohrungen, Wellen etc., insbesondere zur Glättung, Härtung, mit einem Einführbereich (13), einem Einlaufbereich (15), der eine Schräge aufweist, einem Tangentialbereich (18), der nahezu ohne Übergang in einen ersten zylindrischen Arbeitsbereich (17) überführt, dessen Durchmesser größer als der Durchmesser des zu bearbeitenden Bauteils ist, mindestens einem kurvenförmigen Erholungsbereich (20), mindestens einer Mulde (22), mindestens einem zweiten Erholungsbereich (24) und mindestens einem zweiten Arbeitsbereich (26), wobei dessen Länge etwa 60% der Länge des ersten Arbeitsbereichs (17) beträgt, mit einem Auslaufbereich (30), der einen größeren Steigungswinkel als der Einlaufbereich (15) aufweist, mit einem Auslaufzylinder (32) und mit einer Kalotte (34).

2. Werkzeug nach Anspruch 1, dadurch gekennzeichnet, daß zwischen dem Einführbereich (13) und dem Einlaufbereich (15) ein zylindrischer Zentrierbereich (12) vorhanden ist, dessen Achse mit der Achse des zu behandelnden Bauteils zusammenfällt.

3. Werkzeug nach Anspruch 2, dadurch gekennzeichnet, daß der Zentrierbereich (12) in etwa 30% bis 40% der Länge des Bauteils beträgt.

4. Werkzeug nach einem der Ansprüche 1 bis 3, dadurch gekennzeichnet, daß der Einführbereich (13) durch einen Hochdrucksitz ersetzt wird, wobei die Schräge des Sitzes größer oder kleiner als der erwünschte Sitz des Bauteils ist.

5. Werkzeug nach einem der Ansprüche 1 bis 3, dadurch gekennzeichnet, daß sich nach dem zweiten Arbeitsbereich (26) ein Hochdrucksitz anschließt, der den Auslaufbereich (30) ersetzt, so daß der Hochdruckdichtsitz in den Auslaufzylinder (32) übergeht.

6. Werkzeug nach einem der Ansprüche 1 bis 5, dadurch gekennzeichnet, daß die Kalotte (34) korbbogenförmig ausgeführt ist.

7. Verfahren zur Behandlung von Oberflächen von Bauteilen mit Hilfe eines Werkzeugs nach einem der Ansprüche 1 bis 6, dadurch gekennzeichnet, daß die Achsen des Werkzeugs und des zu bearbeitenden Bauteils achsgleich zueinander in einer Aufnahme fixiert werden, daß das Werkzeug relativ zum zu bearbeitenden Bauteil zur Erwärmung der Oberfläche des Bauteils mit einer Mindestgeschwindigkeit bewegt wird, so daß die zu bearbeitende Oberfläche des Bauteils mit Zugeführten, metallischen Fremdionen legiert werden kann.

8. Verfahren nach Anspruch 7, dadurch gekennzeichnet, daß der vor der Relativbewegung des Werkzeugs zum Bauteil auf das Werkzeug mindestens im Einlaufbereich (15) ein metallische Fremdionen enthaltendes, flüssiges Schmiermittel aufgebracht wird.

9. Verfahren nach Anspruch 7 und/oder 8, dadurch gekennzeichnet, daß nach der Relativbewegung des Werkzeugs zum Bauteil die Sitzkante des Bauteils erreicht wird, und daß das Werkzeug mindestens um 360° mit gleichbleibendem Druck und Geschwindigkeit um die Achse gedreht wird.

## Claims

1. Tool for the treatment of surfaces of components, especially of bores, shafts, etc., especially for smoothing and hardening, with an introduction region (13), an entry region (15) having a slant, a tangential region (18) merging virtually without transition into a first cylindrical working region (17), the diameter of which is larger than the diameter of the component to be machined, at least one curved recovery region (20), at least one trough (22), at least one second recovery region (24) and at least one second working region (26), the length of the latter amounting to approximately 60% of the length of the first working region (17), with an exit region (30) which has a larger pitch angle than the entry region (15), with an exit cylinder (32) and with a dome (34).

2. Tool according to Claim 1, characterized in that between the introduction region (13) and the entry region (15) there is a cylindrical centring region (12), the axis of which coincides with the axis of the component to be treated.

3. Tool according to Claim 2, characterized in that the centring region (12) is approximately 30% to 40% of the length of the component.

4. Tool according to one of Claims 1 to 3, characterized in that the introduction region (13) is replaced by a high-pressure seat, the slant of the seat being greater or smaller than the desired seat of the component.

5. Tool according to one of Claims 1 to 3, characterized in that the second working region (26) is followed by a high-pressure seat which replaces the exit region (30), so that the high-pressure sealing seat merges into the exit cylinder (32).

6. Tool according to one of Claims 1 to 5, characterized in that the dome (34) is designed in the form of a three-centre curve.

7. Process for the treatment of surfaces of components by means of a tool according to one of Claims 1 to 6, characterized in that the axes of the tool and of the component to be machined are fixed coaxially with one another in a holder, and in that the tool is moved at a minimum speed relative to the component to be machined, in order to heat the surface of the component, so that the component surface to be machined can be alloyed with foreign metal ions supplied.

8. Process according to Claim 7, characterized in that, before the relative movement of the tool in relation to the component, a fluid lubricant containing foreign metal ions is applied to the tool at least in the entry region (15).

9. Process according to Claim 7 and/or 8, characterized in that, after the relative movement of the tool in relation to the component, the seat edge of the component is reached, and in that the tool is rotated to at least 360° about the axis at a constant pressure and speed.

## Revendications

1. Outil pour traiter des surfaces de pièces, notamment des perçages, des arbres, etc., notamment pour lisser, durcir, comprenant une zone d'entrée (13), une zone de sortie (15) ayant une certaine pente, une zone tangente (18) qui arrive pratiquement sans transition dans une première zone de travail (17), cylindrique, dont le diamètre est supérieur au diamètre de la pièce à usiner, au moins une zone de récupération (20), en forme de courbe, au moins une goulotte (22), au moins une seconde zone de récupération (24) et au moins une seconde zone de travail (26), la longueur de cette seconde zone de travail ne représentant qu'environ 60 % de la longueur de la première zone de travail (17), une zone de sortie (30) qui possède un angle d'inclinaison encore plus grand que la zone d'entrée (15), un cylindre de sortie (32) et une calotte (34).

2. Outil selon la revendication 1,
caractérisé en ce qu'
entre la zone d'introduction (13) et la zone d'entrée (15), il y a une zone de centrage (12), cylindrique, dont l'axe coïncide avec celui de la pièce à traiter.

3. Outil selon la revendication 2,
caractérisé en ce que
la zone de centrage (12) représente entre 30 % et 40 % de la longueur de la pièce.

4. Outil selon l'une des revendications 1 à 3,
caractérisé en ce que
la zone d'entrée (13) est remplacée par un siège à haute pression, l'inclinaison du siège étant supérieure ou inférieure à celle du siège souhaité dans la pièce.

5. Outil selon l'une quelconque des revendications 1 à 3,
caractérisé en ce que
la seconde zone de travail (26) se poursuit par un siège à haute pression qui remplace la zone de sortie (30) pour que le siège d'étanchéité à haute pression rejoigne le cylindre de sortie (32).

6. Outil selon l'une des revendications 1 à 5,
caractérisé en ce que
la calotte (34) a une forme en anse de panier.

7. Procédé pour le traitement des surfaces de pièces à l'aide d'un outil selon l'une des revendications 1 à 6,
caractérisé en ce que
les axes des outils et de la pièce à usiner sont fixés de manière égale les uns par rapport aux autres dans un logement, l'outil étant déplacé par rapport à la pièce à usiner pour chauffer la surface de la pièce, avec une vitesse minimale pour que la surface à usiner de la pièce puisse être alliée avec les ions étrangers, métalliques fournis.

8. Procédé selon la revendication 7,
caractérisé en ce qu'
un agent lubrifiant liquide, contenant des ions étrangers métalliques, est appliqué sur l'outil avant le mouvement relatif de l'outil par rapport à la pièce, au moins dans la zone d'entrée (15).

9. Procédé selon la revendication 7 et/ou 8,
caractérisé en ce qu'
après le mouvement relatif de l'outil par rapport à la pièce, l'arête formant siège de la pièce est atteinte et l'outil est tourné d'au moins 360° à pression et à vitesse constante.
